# EUROPÄISCHE PATENTSCHRIFT

(11) **EP 0 937 926 B1**
(45) Veröffentlichungstag und Bekanntmachung des Hinweises auf die Patenterteilung: **27.04.2005**
(21) Anmeldenummer: 99103227.7
(22) Anmeldetag: 19.02.1999
(51) Int. Cl.: F16K 7/07

(54) **Unterdruckventil**
Vacuum valve
Vanne de sous pression

(30) Priorität: 19.02.1998 DE 19806973
(43) Veröffentlichungstag der Anmeldung: 25.08.1999
(73) Patentinhaber: ROEDIGER VAKUUM- und HAUSTECHNIK GmbH, 63450 Hanau (DE)
(72) Erfinder: Betz, Reinhold, 21255 Tostedt (DE)
(74) Vertreter: Stoffregen, Hans-Herbert, Dr. Dipl.-Phys.

(56) Entgegenhaltungen:
- US-A- 2 026 916
- US-A- 2 518 625
- US-A- 3 479 001
- US-A- 3 936 028
- US-A- 4 111 391
- US-A- 4 742 593

## Beschreibung

Die Erfindung bezieht sich auf ein Unterdruckventil für ein Vakuumentwässerungssystem, mit einem schlauchförmigem Abschnitt, einem Gehäuse, in dem der schlauchförmige Abschnitt angeordnet ist und wobei zwischen dem Gehäuse und dem schlauchförmigen Abschnitt verlaufender Raum mit Druck beaufschlagbar ist, einer an Unterdruckseite des Vakuumentwässe-rungssystems auschließbaren unterdruckseitigen Öffnung und einer an Zulaufseite des Va-kuumentwässerungssystems auschließbaren zulaufseitigen Öffnung, wobei der Schlauchförmige Abschnitt derart vorgeformt bzw. derart gestaucht in dem Gehäuse angeordnet ist, dass der schlauchförmige Abschnitt in einem gebogenen in Bezug auf die unterdruckseitige Öffnung konvex verlaufenden linien- oder streifenförmigen Bereich und/oder außermittig in einem linien- oder streifenförmigem Bereich senkrecht zur Längsachse des schlauchförmigen Abschnitts abdichtend zusammendrückbar ist.

Bei der Vakuumkanalisation ist es erforderlich, in Sammelstellen wie Wasch- oder Toilettenbecken oder Urinale anfallendes Abwasser nach Einleiten eines Spülvorganges über ein Unterdruckventil abzusaugen. Nach dem Stand der Technik werden hierfür mechanische Ventile benutzt, also solche, die einen Ventilstößel, einen Ventilkolben sowie einen Ventilsitz umfassen. Dabei wird das Ventil selbst durch Druckbeaufschlagung einer Membran betätigt. Entsprechende Ventile sind konstruktiv aufwendig und voluminös, so dass ein erheblicher Platzbedarf erforderlich ist.

Aus der US-A- 4 742 593 ist ein Schlauchventil bestimmt für einen Schwimmbadreiniger bekannt. Mit Hilfe des Schlauchventils kann stoßweise Flüssigkeit einem Kopf des Schwimmbadreinigers zugeführt werden, damit eine Bewegung erfolgt. Dabei ist es nicht zwingend erforderlich, dass das Schlauchventil die Flüssigkeit vollständig absperrt.

Der US-A- 3 936 028 ist ein Spülventil in Form eines Schlauchventils zu entnehmen, das von einer Ringkammer aufgenommen ist, die dann fluiddruckbeaufschlagt ist, wenn das Ventil geschlossen sein soll. Zum Öffnen des Ventils wird ein handbetätigtes Steuerventil geöffnet, um den Druck in der Ringkammer abbauen zu können.

Um die Menge von zu fördemdem Erdöl zu steuern, ist aus der US-A- 2 518 625 ein aus Gummi oder Neopren bestehendes Schlauchventil bekannt, das bereichsweise von einer Ringkammer umgeben ist, die mit Hydraulikflüssigkeit beaufschlagt wird, um das Ventil im gewünschten Umfang zu öffnen bzw. zu schließen.

Der vorliegenden Erfindung liegt das Problem zu Grunde, ein entsprechendes zum Absaugen von anfallendem Abwasser zu betätigendes Unterdruckventil der eingangs genannten Art so auszubilden, dass es bei einfachem Aufbau eine hohe Zuverlässigkeit bietet, wobei gleichzeitig nur ein geringer Raum benötigt werden soll.

Zur Lösung des Problems sieht die Erfindung vor, dass zwischen der unterdruckseitigen Öffnung und dem den schlauchförmigen Abschnitt des Unterdruckventil umgebenden Raum des Gehäuses eine von einem Ventil absperrbare oder freigebbare Verbindung verläuft, wobei bei geöffnetem Unterdruckventil die Verbindung freigegeben und bei geschlossenem Unterdruckventil die Verbindung durch das Ventil abgesperrt und der Raum mit Atmosphärendruck beaufschlagt ist.

Erfindungsgemäß wird ein Schlauchventil zur Verfügung gestellt, welches durch in axialer Richtung des Schlauchs wirkender Vorspannung selbständig schließt. Dabei wird der Schlauch derart vorgeformt und/oder eingespannt, dass dieser senkrecht zu dessen Längsachse außermittig verschließt, also durch ungleich lange Schlauchabschnitte einerseits mit einer Ansaugsstelle und andererseits mit einer Unterdruckquelle verbindbar ist. Der Schlauch selbst ist in einem Gehäuse angeordnet, welches mit Unter- bzw. Überdruck beaufschlagbar ist. Eine Unterdruckbeaufschlagung erfolgt dann, wenn das Ventil öffnen soll. Überdruck wie zum Beispiel Druckluft oder Wasser wird dann eingefüllt, wenn eine besonders dichte Schließwirkung erzielt werden soll.

Der schlauchförmige Abschnitt ist derart vorgeformt bzw. gestaucht, dass dieser im Längsschnitt und in abdichtender Position betrachtet aus zwei gleichschenkligen oder im Wesentlichen gleichschenkligen Dreiecken unterschiedlicher Höhen mit gemeinsamer Spitze zusammengesetzt ist. In Draufsicht setzt sich der schlauchförmige Abschnitt in abdichtender Position aus zwei gleichschenkligen oder im Wesentlichen gleichschenkligen Trapezen unterschiedlicher Höhen mit gemeinsamem Basisschenkel zusammen, der vorzugsweise in Richtung des unterdruckseitigen Anschlusses gebogen, also konvex verläuft. Hierdurch ergibt sich eine besonders gute Dichtwirkung. Zusätzlich kann im Bereich des Knickpunktes, also der gemeinsamen Spitze der Dreiecke, eine wulstartige Verstärkung ausgebildet sein, wodurch die beim Öffnen und Schließen erfolgende Walkarbeit auf einen größeren Bereich verteilt wird.

Mit anderen Worten ist der schlauchförmige Abschnitt derart vorgeformt bzw. gestaucht, dass in Bezug sowohl auf dessen Längsachse als auch die linien- bzw. streifenförmigen senkrecht zur Längsachse verlaufenden beim verschlossenen Schlauchabschnitt aufeinanderliegenden Bereiche gegenüberliegende Abschnitt gleichschenklig dreieckförmiger und gleichschenklig trapezförmiger Geometrie vorliegen, wobei erwähntermaßen bevorzugterweise der streifenförmige Abdichtbereich in Bezug auf den Unterdruckanschluss konvex verläuft.

Insbesondere handelt es sich bei dem schlauchförmigen Abschnitt um einen Abschnitt einer Schlauchmembran, die eine hohe Elastizität derart aufweist, dass in erforderlichem Umfang auch nach einer Vielzahl von Schaltvorgängen ein Abdichten erfolgt.

Um zu vermeiden, dass der unterdruckseitige Bereich des schlauchförmigen Abschnitts nach innen, also von außen betrachtet konvex verformt wird, wodurch gegebenenfalls die Dichtwirkung im Bereich der gemeinsamen vorzugsweise wulstartig verstärkte Spitzen der im Wesentlichen gleichschenkligen Dreiecke beeinträchtigt werden könnte, ist vorgesehen, dass der Abschnitt in seinem unterdruckseitigen Bereich verstärkt ist. Hierzu kann der Abschnitt in seinen unterdruckseitigen, in Draufsicht jeweils eine Trapezform aufweisenden Bereichen eine flächige Einlage aufweisen, die durch plattenförmige Elemente wie Bleche oder aber auch durch Metallstreifen oder ähnliches bewirkt sein kann. Alternativ oder ergänzend kann der schlauchförmige Abschnitt in den unterdruckseitigen flächigen Bereichen auch durch Materialverstärkung eine Formgebung derart erfahren, dass der in Draufsicht trapezförmige Bereich eine nach außen gerichtete Vorspannung erfährt.

Der schlauchförmige Abschnitt besitzt in seinen Stirnbereichen, also im Bereich der unterdruckseitigen bzw. zulaufseitigen Öffnungen jeweils einen U-förmig ausgebildeten Rand, dessen äußerer sich in Längsrichtung des schlauchförmigen Abschnitts erstreckender Schenkel in einer umlaufenden Aufnahme des vorzugsweise rohrförmig ausgebildeten Gehäuses verläuft, wobei auf das Gehäuse im Bereich der umlaufenden Aufnahme wie Nut ein Überwurfelement wie Manschette aufbringbar wie aufschraubbar ist, zwischen dem und dem Gehäuse das schlauchförmige Element, d. h. dessen U-förmiger Rand mit seinem Querschenkel festgelegt wie eingespannt ist.

Der schlauchförmige Abschnitt selbst weist im entspannten Zustand eine Länge auf, die größer ist als das Gehäuse zwischen den Einspannstellen des schlauchförmigen Elementes.

Mit anderen Worten ist die Länge des vorzugsweise rohrförmigen Gehäuses, d. h. der Abstand zwischen dessen Stirnseiten kleiner als die wirksame Länge des schlauchförmigen Abschnitts im entspannten Zustand. Hierdurch bedingt erfährt der schlauchförmige Abschnitt dann, wenn dieser im Bereich der Stimflächen des rohrförmigen Gehäuses festgelegt, also eingespannt ist, die erforderliche Stauchung, aufgrund der das Schlauchelement in einem quer zu seiner Längsachse verlaufenden gebogenen linien- bzw. streifenförmigen Bereich zum Abdichten aufeinanderliegend eingeknickt wird. Dabei verläuft der linien- bzw. streifenförmige Bereich des schlauchförmigen Abschnitts zur unterdruckseitigen Öffnung hin versetzt.

Das Gehäuse sollte im Bereich seiner umlaufenden Aufnahme wie Nut muffenartig verstärkt sein und ein Außengewinde aufweisen, um auf den jeweiligen Stirnbereich eine Manschette oder ein sonstiges Überwurfelement aufzuschrauben, von denen eines mit einer Unterdruckquelle bzw. einem zur Unterdruckquelle führenden Sammelbehälter und das andere mit dem Ort verbunden ist, an dem die abzusaugenden Medien anfallen.

Damit das geöffnete Ventil einen Strömungswiderstand zwischen der zulaufseitigen und der unterdruckseingen Öffnung nicht bildet, ist die Gesamtlänge der bei geschlossenem Ventil aufeinanderliegenden linien- oder streifenförmigen Bereiche zumindest gleich dem Umfang der unterdruckseitigen Öffnung.

Weitere Einzelheiten, Vorteile und Merkmale der Erfindung ergeben sich nicht nur aus den Ansprüchen, den diesen zu entnehmenden Merkmalen sondern auch aus der nachfolgenden Beschreibung eines der Zeichnung zu entnehmenden bevorzugten Ausführungsbeispiels.

Es zeigen:
- Fig. 1: einen Längsschnitt durch ein Unterdruckventil,
- Fig. 2: eine Draufsicht auf einen im Unterdruckventil gemäß Fig. 1 eingespannten Schlauchabschnitt,
- Fig. 3: eine der Fig. 1 entsprechende Darstellung eines Unterdruckventils gemäß Erfindung
- Fig. 4: das Unterdruckventil im geöffneten Zustand,
- Fig. 5: eine der Fig. 1 entsprechende Darstellung,
- Fig. 6: eine vergrößerte Detaildarstellung der Fig. 5,
- Fig. 7: eine der Fig. 2 entsprechende Darstellung und
- Fig. 8: eine Vorderansicht des Schlauchabschnitts gemäß Fig. 7.

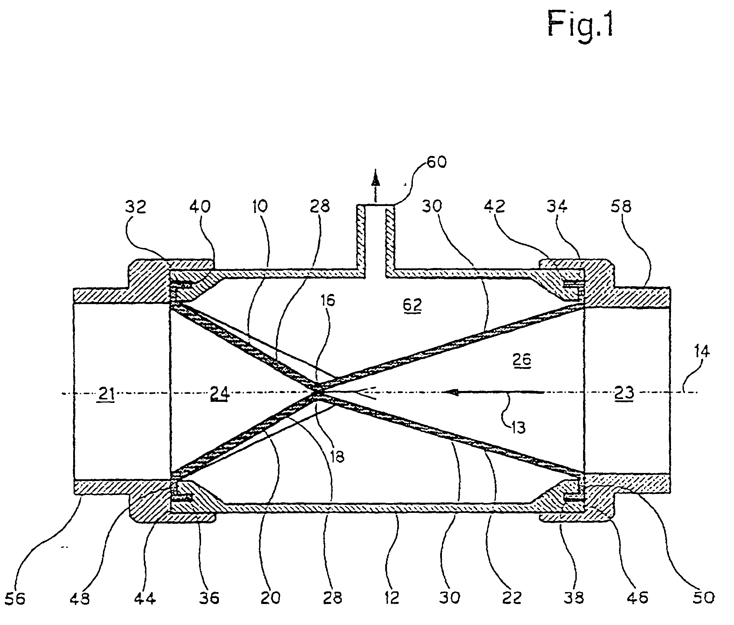

In Fig. 1 ist ein Unterdruckventil bestimmt für eine Vakuumentwässerungsanlage dargestellt, wobei das Unterdruckventil ohne mechanisch arbeitende Schieber, Kolben oder ähnliches arbeitet und als Verschlusselement ausschließlich einen Abschnitt eines Schlauches 10 umfasst, der in einem Gehäuse 12 derart eingespannt ist, dass dieser in axialer Richtung (Pfeil 13) eine Druckbeaufschlagung, d. h. eine Stauchung erfährt, wodurch der Schlauch 10 einknickt und in linien- bzw. streifenförmigen Bereichen 16, 18 dichtend aufeinanderliegt, wie dies in Fig. 1 dargestellt ist. Entsprechend der Fig. 7 weist der linienförmige Bereich 16, 18 einen gebogenen, d. h. konvexen Verlauf auf.

Dabei ist der Schlauch 10 derart vorgeformt, dass die linien- bzw. streifenförmigen Bereiche 16, 18 vorzugsweise außermittig verlaufen, so dass sich zwei Abschnitte 20, 22 des Schlauches 10 mit unterschiedlichen Längen ergeben.

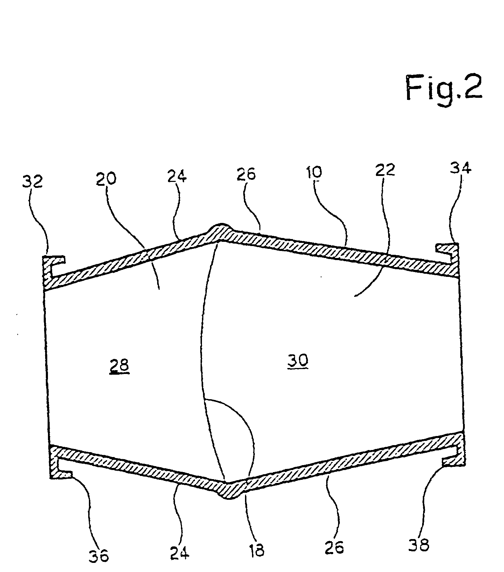

Wie die Schnittdarstellung in Fig. 1 zeigt, weist jeder Abschnitt 20, 22 im Längsschnitt eine gleichschenklig dreieckförmige Geometrie (Dreiecke 24, 26) mit gemeinsamer Spitze auf, die im Bereich 16, 18 und auf der Gehäuselängsachse 14 liegt. In Draufsicht weisen folglich die Abschnitte 20, 22 eine gleichschenklige Trapezform auf, die in Fig. 2 durch die Bezugszeichen 28, 30 gekennzeichnet ist. Dabei weisen die Trapeze 28, 30 einen gemeinsamen Basisschenkel auf, der durch die linien- bzw. streifenförmigen Bereiche 16, 18 gebildet wird. Die Höhen der Trapeze 28, 30 und damit auch die der gleichschenkligen Dreiecke 24, 26 sind grundsätzlich unterschiedlich, wobei der Abschnitt 20, der unterdruckseitig verläuft, eine geringere Länge als der zulaufseitige Abschnitt 22 aufweist. Der Abschnitt 20 ist über eine Öffnung 21 an eine Unterdruckseite und der Abschnitt 22 über eine Öffnung 23 an eine Zulaufseite eines Vakuumabsaugsystems angeschlossen. Hierzu ist der Schlauch 10 vorgeformt, wobei durch Formgebung bereits die in Bezug sowohl auf die Längsachse 14 des Schlauches 10 als auch zu seiner Mittelachse diametral zueinander verlaufenden gleichschenkligen Dreiecke 24, 26 bzw. gleichschenkligen Trapeze 28, 30 vorgegeben werden.

Der Schlauch 10 weist im Bereich seiner beiden Enden einen umlaufenden im Schnitt U-förmigen Rand 32, 34 auf, dessen jeweiliger in Längsrichtung des Schlauchs 10 verlaufender Außenschenkel 36, 38 in einer umlaufenden Nut 40, 42 angeordnet ist, die von der jeweiligen Stirnfläche 44, 46 des Gehäuses 12 ausgeht. Hierzu ist das Gehäuse 12 muffenartig verstärkt. Der Rand 32, 34 verläuft mit seinem Querschenkel 48, 50 entlang der jeweiligen Stirnfläche 44, 46 des Gehäuses 12 und wird mittels auf den jeweiligen Stirnbereich des Gehäuses 12 aufschraubbarer, verklebbarer, aufsteckbarer oder in sonstiger geeigneter Weise aufbringbarer rohrförmiger Ansätze 56, 58 wie Manschetten festgelegt, d. h eingespannt. Dabei ist der Abstand zwischen den Stirnflächen 44, 46 kleiner als die Länge des Schlauches 10 zwischen seinen Querschenkeln 48, 50 im entspannten Zustand. Werden folglich die Manschetten 56, 58 auf das Gehäuse 12 geschraubt, erfahrt der Schlauch 10 eine Stauchung mit der Folge, dass dieser im Bereich 16, 18 einknickt und somit eine gewünschte Dichtung hervorrufen kann.

Das Gehäuse 12 weist einen Anschluss 60 auf, der zu dem Raum 62 zwischen dem Gehäuse 12 und dem Schlauch 10 führt. Der Raum 62 kann nunmehr in erforderlichem Umfang mit Druck beaufschlagt werden, d. h. mit Unterdruck dann, wenn das Ventil öffnen soll, also die Bereiche 16, 18 des Schlauches 10 voneinander entfernt werden sollen, damit das an der Zulaufseite anstehende Medium zur Unterdruckseite abgesaugt werden kann (Pfeil 13).

Um eine gewünschte erhöhte Schließwirkung zu erzielen, insbesondere dann, wenn an der Zulaufseite, also an der Öffnung 23 ein erheblicher Staudruck anstehen kann, kann der Raum 62 mit Überdruck gefüllt werden. Dies kann z. B. durch Befüllen des Raums mit Wasser geschehen.

Um sicherzustellen, dass der Abschnitt 20, also der unterdruckseitige Bereich des Schlauches 10 aufgrund des fortwährend anstehenden Unterdrucks nicht nach innen durchgebogen, also in Bezug auf das Gehäuse 12 konkav verformt wird, kann der Abschnitt 20 in seinen trapezförmigen Abschnitten 28 verstärkt sein und/oder Einlagen aufweisen, die eine entsprechende und gegebenenfalls unerwünschte konkave Verformung ausschließen; denn anderenfalls könnte im Bereich der Knickpunkte des Schauches 10, die den gemeinsamen Spitzen der Dreiecke 24, 26 entsprechen, eine Undichtigkeit auftreten.

Die Verstärkung kann dadurch erfolgen, dass das Schlauchmaterial in seinen trapezförmigen Bereichen 28 verstärkt ist. Auch können plattenförmige Elemente aufgebracht oder eingespritzt sein. Hierbei kann es sich um Metallplatten oder mehrere Metallstreifen handeln. Andere geeignete Maßnahmen, die eine Vorspannung der trapezförmigen Abschnitte 28 in Richtung der Gehäusewandung bewirken, sind gleichfalls möglich.

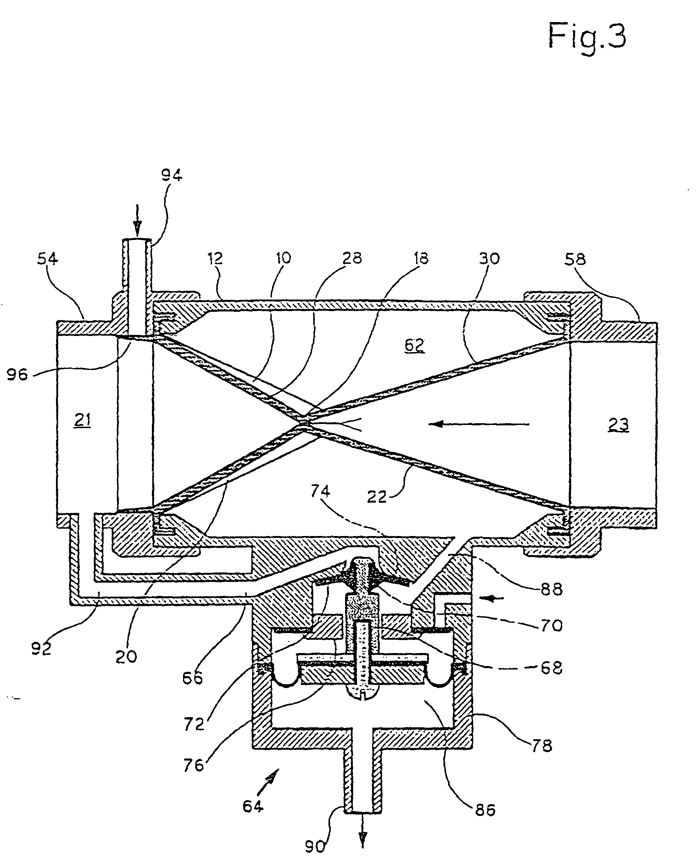

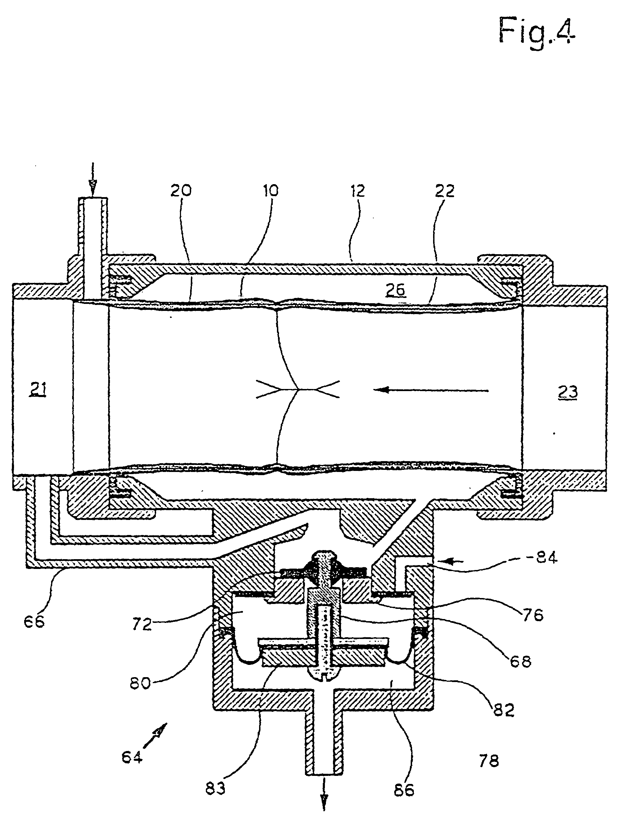

Den Fig. 3 und 4 ist das erfindungsgemäße Unterdruckventil zu entnehmen, wobei der den Schlauchabschnitt 10 umgebende und von dem Gehäuse 12 umschlossene Raum 62 mit einem Hilfsventil 64 verbunden ist, um einerseits den Raum 62 mit dem erforderlichen Druck zu beaufschlagen, damit das Ventil geöffnet werden kann (Fig. 4), und andererseits für den Fall, dass die Unterdruckseite 21 nicht im erforderlichen Umfang mit Unterdruck beaufschlagt ist, ungeachtet dessen die Schließfunktion des Ventils sicherzustellen. Das Hilfsventil 64 öffnet bzw. schließt eine zwischen der Unterdruckseite 21 und dem Raum 62 verlaufende Verbindung 66 mittels eines von einem Ventilkolben 68 ausgehenden Ventiltellers 70, der an als Ventilsitz wirkenden Abschnitten 72, 74 der Verbindung 66 anlegbar ist (Fig. 3) oder zu diesen beabstandet verläuft. Der Ventilkolben 68 ist von einem ringförmigen Einsatz 76 in einem Ventilgehäuse 78 axial verschiebbar geführt, wobei in der die Verbindung 66 freigebenden Stellung des Ventiltellers 70 dieser an dem ringförmigen Einsatz 76 dichtend anliegt (Fig. 4). In dieser Stellung wird eine im Gehäuse 78 von einer Membran 82 abgetrennte erste Kammer 80 gegenüber der Verbindung 66 und damit dem den Schlauch 10 umgebenden Raum 62 in dem Gehäuse 12 abgesperrt. Die erste Kammer 80 selbst ist über einen Kanal 84 mit der Umgebung verbunden. Der Kanal 84 ermöglicht demzufolge eine Ventilbelüftung. Auf der zu dem Ventilteller 70 gegenüberliegenden Seite der Membran 82 begrenzt diese eine zweite Kammer 86, die mit einem Unterdruckanschluss des Steuerventils einer Vakuumabsauganlage verbunden ist.

Der Ventilkolben 68, der zumindest bereichsweise beabstandet den Einsatz 76 durchsetzt, ist mit einer Befestigungsplatte 83 für die Membran verbunden. Dabei verläuft die Befestigungsplatte 83 zentral zu der Membran 82.

Die Funktion des Hilfsventils 64 ist nun wie folgt. Damit das Unterdruckventil geschlossen ist, muss der Raum 62 zumindest mit Atmosphärendruck gefüllt sein. Hierzu ist es erforderlich, dass das Hilfsventil 64, also der Ventilteller 70 an dem von den Absätzen 72, 74 der Verbindung 66 gebildeten Ventilsitz anliegt. Somit kann Atmosphärendruck über die Öffnung 84 und den den Ventilkolben 68 umgebenden Ringraum in dem Ringelement 76 zu dem Raum 62 über einen Abschnitt 88 der Verbindung 66 gelangen. Soll das Schlauchventil geöffnet werden, so liegt an dem zu der Steuerung führenden Anschluss 90 Unterdruck mit der Folge an, dass die Membran in die zweite Kammer 86 hinein verstellt wird und somit der Ventilteller 70 von dem Ventilsitz 72, 74 abhebt. Die Verbindung 66 zwischen der Unterdruckseite 21 und dem den Schlauch 10 umgebenden Raum 62 wird freigegeben, wobei gleichzeitig die Verbindung gegenüber dem Atmosphärendruck durch Anliegen des Ventiltellers 70 auf dem Ringelement 76 abgesperrt ist. Folglich stellt sich in dem Raum 62 ein Unterdruck mit der Folge ein, dass das Schlauchventil öffnet.

Sofern bei geschlossenem Schlauchventil die Unterdruckseite nicht den notwendigen Unterdruck aufiveist und sich in diesem Bereich Flüssigkeit befinden sollte, kann diese über den unterdruckseitigen Abschnitt 92 der Verbindung 66 in Richtung des Ventilsitzes 72 , 74 mit der Folge strömen, dass aufgrund des durch die Flüssigkeit bedingten Druckaufbaus von Luft in dem Abschnitt 92 der Ventilteller 70 und somit der Kolben 68 in Richtung des Einsatzes 76 verschoben wird, wodurch eine Abdichtung gegenüber der Atmosphäre (Öffnung 84) erfolgt. Die durch die in dem Abschnitt vorhandene Flüssigkeit hervorgerufene Druckerhöhung kann sich somit in die Kammer 62 mit der Folge fortsetzen, dass das Schlauchventil eine Druckbeaufschlagung in Schließstellung erfährt. Es ergibt sich demnach ein Druckausgleich zwischen dem unterdruckseitigen Anschluss 21 und der Kammer 62. Hierdurch bedingt wirkt auf die Außenfläche der Schlauchabschnitte 20, 22 ein Druck mit der Folge, dass das Ventil geschlossen wird bzw. bleibt.

Des Weiteren geht von dem unterdruckseitigen Bereich des Gehäuses 12, und zwar von dessen Ansatz 56 ein Unterdruckanschluss 94 aus, der zu der nicht dargestellten Steueranordnung führt. Der Anschluss 94 wird mit Unterdruck beaufschlagt, sofern an der Unterdruckseite 21 ein Vakuum anliegt. Damit Flüssigkeiten beim Öffnen des Ventils in den Anschluss 94 nicht strömen können, ist der Anschluss 94 unterdruckseitig von einer Lippe 96 des Schlauchabschnitts 20 verschließbar, und zwar dann, wenn bei geöffnetem Ventil Flüssigkeit zur Unterdruckseite 21 hin strömt. Somit übt die Lippe 96 die Funktion eines Rückschlagventils aus.

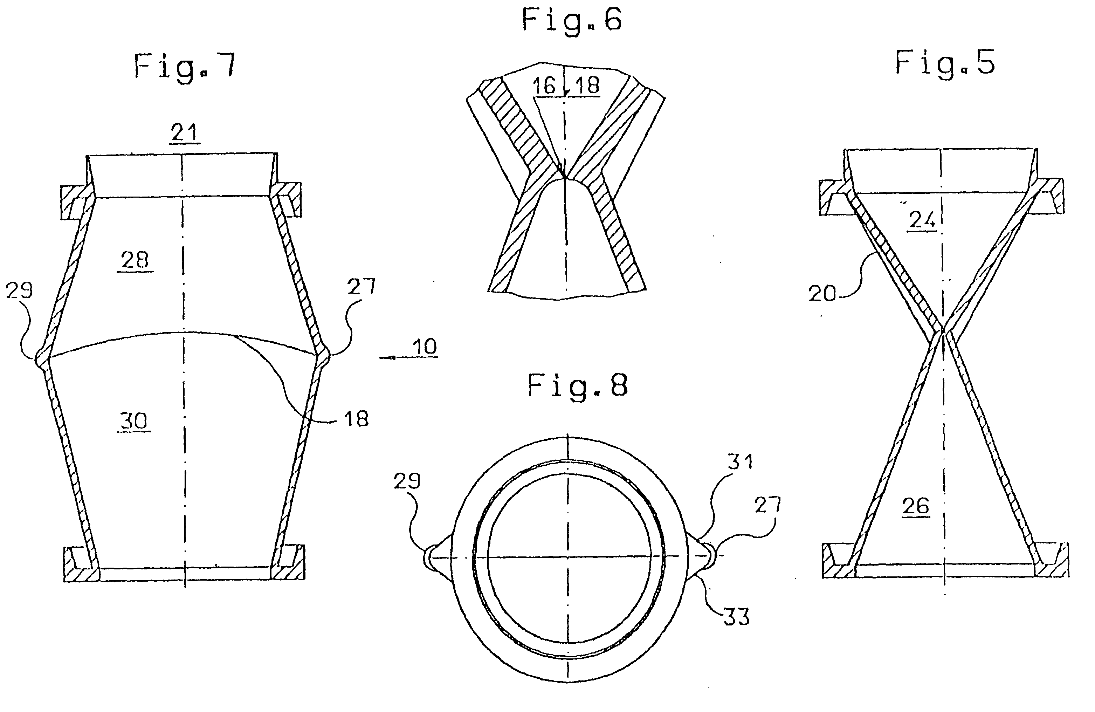

In den Fig. 5 bis 8 sind hervorzuhebende Weiterbildungen des erfindungsgemäßen Unterdruckventils dargestellt, die sich einerseits auf die Abdichtlinien 16, 18 und andererseits auf die die gemeinsamen Spitzen der Dreiecke 24, 26 bildenden Knickpunkte 27, 29 beziehen.

So ist der Schlauch 10 derart vorgeformt, dass die Biegelinie 16, 18, also der bei verschlossenem Schlauchventil aufeinanderliegende Bereich, einen in Bezug auf den unterdruckseitigen Anschluss 21 konvex gebogenen Verlauf zeigen, wie insbesondere auch durch die Detaildarstellung gemäß Fig. 6 verdeutlicht werden soll. Hierdurch ergibt sich eine erhöhte Abdichtwirkung.

Ergänzend sind die Knickpunkte 27, 29, die den gemeinsamen Spitzen der Dreiecke 24, 26 entsprechen, wulstartig verstärkt, so dass die durch das Öffnen und Schließen des Schlauchventils bedingte Walkarbeit nicht punktuell, sondern im Bereich der wulstartigen Verstärkungen 27, 29 auf die Bereiche 31, 33 aufgeteilt wird.

Als weiteres hervorzuhebendes Merkmal ist anzuführen, dass die Länge der Biegelinien 16, 18 und damit die Geometrie des Schlauchs 10 im Bereich seiner Abdichtung insgesamt so gewählt sind, dass bei geöffnetem Ventil ein freier Querschnitt zur Verfügung steht, der zumindest gleich der unterdruckseitigen Öffnung bzw. dem Anschluss 21 ist.

Das erfindungsgemäße Ventil hat den Vorteil, dass ohne sonstige mechanische Hilfsmittel wie Federn, Kolben oder Schieber ein Verschließen möglich ist. Auch kann das Ventil überaus kurz ausgebildet sein, so dass ein Einbau z. B. in Toiletten möglich ist, ohne dass es zusätzlicher aufwendiger Baumaßnahmen, die einen erhöhten Platz benötigen, bedarf.

## Patentansprüche

1. Unterdruckventil für ein Vakuumentwässerungssystem, mit
- einem schlauchförmigem Abschnitt (10),
- einem Gehäuse (12), in dem der schlauchförmige Abschnitt angeordnet ist und wobei zwischen dem Gehäuse und dem schlauchförmigen Abschnitt verlaufender Raum (62) mit Druck beaufschlagbar ist,
- einer an Unterdruckseite des Vakuumentwässerungssystems auscheießbaren unterdruckseitigen Öffnung (21) und
- einer an Zulaufseite des Vakuumentwässerungssystems auschließbaren zulaufseitigen Öffnung (23),
wobei der schlauchförmige Abschnitt derart vorgeformt bzw. derart gestaucht in dem Gehäuse angeordnet ist, dass der schlauchförmige Abschnitt in einem gebogenen in Bezug auf die unterdruckseitige Öffnung konvex verlaufenden linien- oder streifenförmigen Bereich (16, 18) und/oder außermittig in einem linien- oder streifenförmigem Bereich senkrecht zur Längsachse (14) des schlauchförmigen Abschnitts abdichtend zusammendrückbar ist,
**dadurch gekennzeichnet,**
**dass** zwischen der unterdruckseitigen Öffnung (21) und dem den schlauchförmigen Abschnitt (10) des Unterdruckventil umgebenden Raum (62) des Gehäuses (12) eine von einem Ventil (68, 70, 72, 74) absperrbare oder freigebbare Verbindung (66) verläuft, wobei bei geöffnetem Unterdruckventil die Verbindung freigegeben und bei geschlossenem Unterdruckventil die Verbindung durch das Ventil abgesperrt und der Raum mit Atmosphärendruck beaufschlagt ist.

2. Unterdruckventil nach Anspruch 1,
**dadurch gekennzeichnet,**
**dass** der schlauchförmige Abschnitt (10) in Längsrichtung und in abdichtender Position betrachtet aus zwei gleichschenkligen oder im Wesentlichen gleichschenkligen Dreiecken (24, 26) unterschiedlicher Höhen mit gemeinsamer Spitze zusammengesetzt ist.

3. Unterdruckventil nach Ansprüch 1 oder 2,
**dadurch gekennzeichnet,**
**dass** der schlauchförmige Abschnitt (10) in abdichtender Position in Draufsicht aus zwei gleichschenkligen oder im Wesentlichen gleichschenkligen Trapezen (28, 30) unterschiedlicher Höhen und gemeinsamen Basisschenkeln (16, 18) zusammengesetzt ist, wobei der gemeinsame Basisschenkel vorzugsweise einen gebogenen Verlauf aufweist.

4. Unterdruckventil nach zumindest einem der vorhergehenden Ansprüche,
**dadurch gekennzeichnet,**
**dass** der schlauchförmige Abschnitt (10) derart vorgeformt ist, dass er in Bezug auf dessen Längsachse (14) und der linien- bzw. streifenförmig senkrecht zur Längsachse verlaufenden bei abdichtendem Unterdruckventil aufeinanderliegenden Bereiche (16, 18) gegenüberliegend gleichschenklige oder im Wesentlichen gleichschenklige Dreiecke (24, 26) und gleichschenklige oder im Wesentlichen gleichschenklige trapezförmige Bereiche (28, 30) jeweils unterschiedlicher Höhen aufweist.

5. Unterdruckventil nach zumindest einem der vorhergehenden Ansprüche,
**dadurch gekennzeichnet,**
**dass** die Enden der Basisschenkel (16, 18) bzw. die Spitzen der Dreiecke (24, 26) wulstartig verstärkt sind.

6. Unterdruckventil nach zumindest einem der vorhergehenden Ansprüche,
**dadurch gekennzeichnet,**
**dass** der schlauchförmige Abschnitt (10) ein Abschnitt einer Schlauchmembran ist.

7. Unterdruckventil nach zumindest einem der vorhergehenden Ansprüche,
**dadurch gekennzeichnet,**
**dass** der schlauchförmige Abschnitt (10) in seinen der unterdruckseitigen Öffnung (21) naheliegenden Bereichen (24, 28) verstärkt ist.

8. Unterdruckventil nach zumindest einem der vorhergehenden Ansprüche,
**dadurch gekennzeichnet,**
**dass** die an der unterdruckseitigen Öffnung (21) angrenzenden in Draufsicht eine Trapezform aufweisende Bereiche (28) jeweils eine vorzugsweise flächige Einlage aufweisen.

9. Unterdruckventil nach Anspruch 8,
**dadurch gekennzeichnet,**
**dass** die Einlage durch ein plattenförmiges Element wie Blech, Metallstreifen oder ähnliches gebildet ist.

10. Unterdruckventil nach zumindest einem der vorhergehenden Ansprüche 8 oder 9,
**dadurch gekennzeichnet,**
**dass** die Einlage umspritzt ist. 4

11. Unterdruckventil nach zumindest einem der vorhergehenden Ansprüche 8-10,
**dadurch gekennzeichnet,**
**dass** die Einlage in dem trapezförmigen Bereich (28) eine nach außen gerichtete Vorspannung erzeugt.

12. Unterdruckventil nach zumindest einem der vorhergehenden Ansprüche,
**dadurch gekennzeichnet,**
**dass** der schlauchförmige Abschnittt (10) in seinem jeweiligen Randbereich U-förmig ausgebildet ist, wobei sein außenseitiger in Längsrichtung des schlauchförmigen Abschnitts verlaufender Schenkel (36, 38) in einer umlaufenden Aufnahme wie Nut (40, 42) des Gehäuses (12) angeordnet und dort festgelegt wie festgespannt ist.

13. Unterdruckventil nach Anspruch 12,
**dadurch gekennzeichnet,**
**dass** das Gehäuse (12) in seinem die umlaufende Aufnahme (40, 42) aufweisendem Stirnbereich (44, 46) vorzugsweise verstärkt ist und von einem Überwurfelement wie Manschette (56, 58) umgeben ist, wobei das Schlauchelement zwischen dem Gehäuse und dem Überwurfelement festgeklemmt wie eingespannt ist.

14. Unterdruckventil nach Anspruch 13,
**dadurch gekennzeichnet,**
**dass** zwischen stimseitigem Gehäusebereich (44, 46) und dem Überwurfelement das Schlauchelement (10) mit seinem jeweiligen randseitigen Querschenkel (48, 50) verläuft.

15. Unterdruckventil nach zumindest einem der vorhergehenden Ansprüche,
**dadurch gekennzeichnet,**
**dass** der schlauchförmige Abschnitt (10) im entspannten Zustand eine Länge aufweist, die größer als der Abstand seiner Einspannstellen ist.

16. Unterdruckventil nach zumindest einem der vorhergehenden Ansprüche,
**dadurch gekennzeichnet,**
**dass** das Gehäuse einen Anschluss (88) aufweist, über den der zwischen dem schlauchförmigen Abschnitt (10) und dem Gehäuse (12) vorhandene Raum (62) mit Unterdruck und/oder Überdruck beaufschlagbar ist.

17. Unterdruckventil nach zumindest einem der vorhergehenden Ansprüche,
**dadurch gekennzeichnet,**
**dass** die linien- bzw. streifenförmigen Bereiche (16, 18) des schlauchförmigen Abschnitts (10) zur unterdruckseitigen Öffnung (21) hin versetzt verlaufen.

18. Unterdruckventil nach Anspruch 1,
**dadurch gekennzeichnet,**
**dass** das Ventil einen Ventilkolben (68) umfasst, der in einem Ventilgehäuse (78) angeordneten, vorzugsweise ringförmigen Führungselement (76) axial verschiebbar ist, dass der Ventilkolben mit einer Membran (82) verbunden ist, die in dem Ventilgehäuse eine erste Kammer (80) von einer zweiten Kammer (86) trennt, dass die erste Kammer mit Umgebungsdruck und die zweite Kammer mit einem Unterdrucksteuerventil verbunden ist und dass bei die Verbindung (66) sperrendem Ventil (68, 70, 72, 74) über den Kanal (84) von der ersten Kammer Atmosphärendruck zu dem den Schlauchabschnitt (10) in dem Gehäuse (12) umgebenden Raum (62) gelangt.

19. Unterdruckventil nach zumindest einem der vorhergehenden Ansprüche,
**dadurch gekennzeichnet,**
**dass** der Ventilkolben (68) zumindest abschnittsweise beabstandet den ringförmigen Einsatz (76) in dem Ventilgehäuse (78) durchsetzt und die Membran (82) ihrerseits von einer Befestigungsplatte (83) ausgeht, die mit dem Ventilkolben (68) verbunden ist.

20. Unterdruckventil nach zumindest einem der vorhergehenden Ansprüche,
**dadurch gekennzeichnet,**
**dass** im unterdruckseitigen Bereich des den schlauchförmigen Abschnitt (10) umgebenden Gehäuses (12) bzw. dessen unterdruckseitig verlaufendem Ansatz (56) ein zu einer Unterdruckventilsteuerung führender Anschluss (94) angeordnet ist, der von einem lippenartigen Abschnitt (96) des schlauchförmigen Abschnitts (10) bei geöffnetem Unterdruckventil verschließbar und bei verschlossenem Unterdruckventil freigebbar ist.

21. Unterdruckventil nach zumindest einem der vorhergehenden Ansprüche,
**dadurch gekennzeichnet,**
**dass** die Gesamtlänge der linien- bzw. streifenförmigen Bereiche (16, 18) zumindest gleich dem Umfang der unterdruckseitigen Öffnung (21) ist.

## Claims

1. Suction relief valve for a vacuum sewer system, having
- a flexible tube-like section (10),
- a housing (12), in which the flexible tube-like section is arranged and where space (62) running between the housing and the flexible tube-like section can be acted upon by pressure,
- on the low pressure side an opening (21) connectable to a low pressure side of the vacuum sewer system,
- on the inflow side an opening (23) connectable to an inlet side of the vacuum sewer system,
where the flexible tube-like section is arranged in the housing in such a preformed and jolted manner, respectively, that the flexible tube-like section is compressible in a sealing manner in a curved line- or strip-like region (16, 1) running convex with relation to the low pressure side opening and/or eccentric in a line- or strip-like region perpendicular to the longitudinal axis (14) of the flexible tube-like section,
**characterized in**
**that** between the low pressure side opening (21) and the space (62) of the housing (12) surrounding the flexible tube-like section (10) of the suction relief valve a connection (66) runs, that is sealable or releasable by a valve (68, 70, 72, 74), where with the suction relief valve being opened the connection is released and with the suction relief valve being closed the connection is sealed by the valve and the space is acted upon by atmospheric pressure.

2. Suction relief valve according to claim 1,
**characterized in**
**that** the flexible tube-like section (10) viewed lengthwise and in sealing position is composed of two isosceles or basically isosceles triangles (24, 26) of different heights with a shared apex.

3. Suction relief valve according to claim 1 or 2,
**characterized in**
**that** the flexible tube-like section (10) in sealing position in plan view is composed of two isosceles or basically isosceles trapeziums (28, 30) of different heights and common basic sides (16, 18), where the common basic side preferably shows a curved course.

4. Suction relief valve according to at least one of the preceding claims,
**characterized in**
**that** the flexible tube-like section (10) is preformed such, that, with relation to its longitudinal axis (14) and the line- or strip-like regions (16, 18) running perpendicular to the longitudinal axis and lying on top of each other with the suction relief valve sealing, the flexible tube-like section comprises opposite isosceles or basically isosceles triangles (24, 26) and isosceles or basically isosceles trapezoid regions (28, 30) each of different heights.

5. Suction relief valve according to at least one of the preceding claims,
**characterized in**
**that** the ends of the basic sides (16, 18) and the apexes of the triangles (24, 26) respectively, are reinforced bulgingly.

6. Suction relief valve according to at least one of the preceding claims,
**characterized in**
**that** the flexible tube-like section (10) is a section of a tube diaphragm.

7. Suction relief valve according to at least one of the preceding claims,
**characterized in**
**that** the flexible tube-like section (10) is reinforced in its regions (24, 28) being close to the low pressure side opening (21).

8. Suction relief valve according to at least one of the preceding claims,
**characterized in**
**that** the regions (28) being adjacent to the low pressure side opening (21) and showing a trapezium in top view each comprise a preferably plane insert.

9. Suction relief valve according to claim 8,
**characterized in**
**that** the insert is formed by a plane-like element as sheet metal, slats or the like.

10. Suction relief valve according to at least one of the preceding claims 8 or 9,
**characterized in**
**that** the insert is extrusion-coated.

11. Suction relief valve according to at least one of the preceding claims 8 - 10,
**characterized in**
**that** in the trapezoid region (28) the insert generates an outward prestress.

12. Suction relief valve according to at least one of the preceding claims,
**characterized in**
**that** the flexible tube-like section (10) has a U-shaped design in its respective marginal region, where its outside leg (36, 38) running in longitudinal direction of the flexible tube-like section is arranged in a circumferential receiver as groove (40, 42) of the housing (12) where it is fixed as tightened.

13. Suction relief valve according to claim 12,
**characterized in**
**that** the housing (12) in its front region (44, 46) having the circumferential receiver (40, 42) preferably is reinforced and surrounded by a hasp element as socket (56, 58), where the tube-element is clamped as tightened between the housing and the hasp element.

14. Suction relief valve according to claim 13,
**characterized in**
**that** the flexible tube-like element (10) with its respective marginal lateral side runs between the front housing region (44, 46) and the hasp element.

15. Suction relief valve according to at least one of the preceding claims,
**characterized in**
**that** the flexible tube-like section (10) in unstressed condition has a length, which is greater than the distance of its clamping spots.

16. Suction relief valve according to at least one of the preceding claims,
**characterized in**
**that** the housing comprises a connection (88) by which the space (62) present between the flexible tube-like section (10) and the housing (12) can be acted upon by low pressure and/or high pressure.

17. Suction relief valve according to at least one of the preceding claims,
**characterized in**
**that** the line- or strip-like regions (16, 18) of the flexible tube-like section (10) run offset towards the low pressure side opening (21).

18. Suction relief valve according to claim 1,
**characterized in**
**that** the valve comprises a valve piston (68), that is axially displaceable in a preferably annular guide element (76) arranged in a valve housing (78), that the valve piston is connected with a diaphragm, that separates in the valve housing a first chamber (80) from a second chamber (86), that the first chamber is connected with ambient pressure and the second chamber is connected with a low pressure control valve and that via the conduit (84) from the fist chamber to the flexible tube-like section (10) in the housing (12) atmospheric pressure reaches the space (62) when the valve (68, 70, 72, 74) closing the connection (66).

19. Suction relief valve according to at least one of the preceding claims,
**characterized in**
**that** the valve piston (68) penetrates the annular insert (76) in the valve housing (78) at least in sections with distance and the diaphragm (82) in turn originates from a fastening plate (83), which is connected with the valve piston (68).

20. Suction relief valve according to at least one of the preceding claims,
**characterized in**
**that** in the low pressure side region of the housing (12) surrounding the flexible tube-like section (10) or its socket (56) running on the low pressure side, a connection (94) is arranged leading to a suction relieve valve control, said connection is closable by a lip-like section (96) of the flexible tube-like section (10) when the low suction relief valve is opened and releasable when the low suction relief valve is closed.

21. Suction relief valve according to at least one of the preceding claims,
**characterized in**
**that** the total length of the line or strip-like regions (16, 18) are at least equal to the circumference of the low pressure side opening (21).

## Revendications

1. Soupape de dépression pour un système de drainage sous vide comportant :
- un segment (10) tubulaire,
- un boîtier (12) dans lequel est placé le segment tubulaire, l'espace (62) situé entre le boîtier et le segment tubulaire pouvant être soumis à une pression,
- côté dépression une ouverture (21) qui peut être raccordée au côté dépression du système de drainage sous vide et
- côté alimentation une ouverture (23) qui peut être raccordée au côté alimentation du système de drainage sous vide,
le segment tubulaire préformé ou ainsi refoulé étant placé dans le boîtier de telle manière que le segment tubulaire peut être compressé de façon étanche, perpendiculairement à l'axe longitudinal (14) du segment tubulaire, dans une zone (16, 18) courbée en forme de ligne ou de bande et convexe par rapport à l'ouverture côté dépression et/ou dans une zone en forme de ligne ou de bande de façon excentrée,
**caractérisée en ce qu'**
une liaison (66) qui peut être bloquée ou libérée par une soupape (68, 70, 72, 74) s'étend entre l'ouverture (21) côté dépression et l'espace (62) - du boîtier (12) - qui entoure le segment tubulaire (10) de la soupape de dépression, la liaison étant libérée lorsque la soupape de dépression est ouverte, alors qu'elle est bloquée par la soupape lorsque la soupape de dépression est fermée, l'espace étant soumis à la pression atmosphérique.

2. Soupape de dépression selon la revendication 1,
**caractérisée en ce que**
vu en direction longitudinale et en position qui assure l'étanchéité, le segment tubulaire (10) est composé de deux triangles (24, 26) isocèles ou pratiquement isocèles dont les hauteurs sont différentes et le sommet est commun.

3. Soupape de dépression selon la revendication 1 ou 2,
**caractérisée en ce que**
en position étanche et en vue de dessus, le segment tubulaire (10) est composé de deux trapèzes (28, 30) isocèles ou pratiquement isocèles dont les hauteurs sont différentes et les bases sont communes, la base commune étant de préférence incurvée.

4. Soupape de dépression selon au moins une des revendications précédentes,
**caractérisée en ce que**
le segment tubulaire (10) est formé de telle manière que, par rapport à son axe longitudinal (14) et aux zones (16, 18) superposées qui s'étendent en ligne ou en bande perpendiculairement à l'axe longitudinal lorsque la soupape de dépression assure l'étanchéité, il présente face à face des triangles (24, 26) isocèles ou pratiquement isocèles et des zones trapézoïdales (28, 30) isocèles ou pratiquement isocèles dont les hauteurs sont chacune différentes.

5. Soupape de dépression selon au moins une des revendications précédentes,
**caractérisée en ce que**
les extrémités des bases (16, 18) ou les sommets des triangles (24, 26) sont renforcés sous forme de bourrelets.

6. Soupape de dépression selon au moins une des revendications précédentes,
**caractérisée en ce que**
le segment tubulaire (10) est un segment d'une membrane de tuyau.

7. Soupape de dépression selon au moins une des revendications précédentes,
**caractérisée en ce que**
le segment tubulaire (10) est renforcé dans ses zones (24, 28) proches de l'ouverture (21) côté dépression.

8. Soupape de dépression selon au moins une des revendications précédentes,
**caractérisée en ce que**
les zones (28) trapézoïdales en vue de dessus et contiguës à l'ouverture (21) côté dépression présentent chacune une insertion de préférence plate.

9. Soupape de dépression selon la revendication 8,
**caractérisée en ce que**
l'insertion est formée par un élément en plaque comme une tôle, une bande métallique ou un élément comparable.

10. Soupape de dépression selon au moins une des revendications précédentes 8 ou 9,
**caractérisée en ce que**
l'insertion est extrudée.

11. Soupape de dépression selon au moins une des revendications précédentes 8 à 10,
**caractérisée en ce que**
l'insertion dans la zone (28) trapézoïdale produit une précontrainte dirigée vers l'extérieur.

12. Soupape de dépression selon au moins une des revendications précédentes,
**caractérisée en ce que**
le segment tubulaire (10) dans chacune de ses zones de bord a une forme de U, sa branche (36, 38) qui s'étend du côté extérieur en direction longitudinale du segment tubulaire étant placée dans un logement périphérique comme une rainure (40, 42) du boîtier (12), en y étant maintenue, par exemple serrée.

13. Soupape de dépression selon la revendication 12,
**caractérisée en ce que**
dans sa zone frontale (44, 46) munie du logement périphérique (40, 42), le boîtier (12) est de préférence renforcé et est entouré d'un élément d'accouplement comme des manchettes (56, 58), l'élément de tuyau étant coincé, par exemple encastré, entre le boîtier et l'élément d'accouplement.

14. Soupape de dépression selon la revendication 13,
**caractérisée en ce que**,
par chacune de ses branches transversales (48, 50) proches du bord, l'élément de tuyau (10) s'étend entre la zone de boîtier (44, 46) frontale et l'élément d'accouplement.

15. Soupape de dépression selon au moins une des revendications précédentes,
**caractérisée en ce que**
à l'état détendu le segment tubulaire (10) a une longueur supérieure à l'écart de ses points d'encastrement.

16. Soupape de dépression selon au moins une des revendications précédentes,
**caractérisée en ce que**
le boîtier présente un raccordement (88) à l'aide duquel l'espace (62) entre le segment tubulaire (10) et le boîtier (12) peut être soumis à une surpression et/ou à une dépression.

17. Soupape de dépression selon au moins une des revendications précédentes,
**caractérisée en ce que**
les zones (16, 18) en ligne ou en bandes du segment tubulaire (10) sont disposées en décalage par rapport à l'ouverture (21) côté dépression.

18. Soupape de dépression selon la revendication 1,
**caractérisée en ce que**
la soupape comprend un piston à soupape (68) mobile axialement dans un élément de guidage (76) de préférence annulaire qui est placé dans la cage de soupape (78) de telle manière que le piston à soupape est relié à une membrane (82) qui sépare dans la cage de soupape une première chambre (80) d'une deuxième chambre (86) et que la première chambre est reliée à la pression de l'environnement et la deuxième chambre à une soupape de commande de la dépression et, lorsque la soupape (68, 70, 72, 74) bloque la liaison (66), la pression atmosphérique parvient de la première chambre par l'intermédiaire du canal (84) jusque dans l'espace (62) qui entoure le segment de tuyau (10) dans le boîtier (12).

19. Soupape de dépression selon au moins une des revendications précédentes,
**caractérisée en ce que**
le piston à soupape (68) traverse au moins à certains endroits l'insertion (76) annulaire dans la cage de soupape (78), et
la membrane (82) quant à elle part d'une plaque de fixation (83) reliée au piston à soupape (68).

20. Soupape de dépression selon au moins une des revendications précédentes,
**caractérisée en ce que**
dans la zone côté dépression du boîtier (12) qui entoure le segment tubulaire (10) ou de son épaulement (56) qui s'étend côté dépression on place un raccordement (94) qui conduit à une commande de la soupape de dépression et qui peut être fermé par un segment (96) sous forme de lèvre du segment tubulaire (10) lorsque la soupape de dépression est ouverte et être libéré lorsque la soupape de dépression est fermée.

21. Soupape de dépression selon au moins une des revendications précédentes,
**caractérisée en ce que**
la longueur totale des zones (16, 18) en ligne ou en bande est au moins égale à la circonférence de l'ouverture (21) côté dépression.
